# EUROPEAN PATENT SPECIFICATION

(11) **EP 2 902 680 B1**
(45) Date of publication and mention of the grant of the patent: **02.11.2016**
(21) Application number: 14153054.3
(22) Date of filing: 29.01.2014
(51) Int. Cl.: F16K 31/04, F25B 41/00, G01F 25/00

(54) **A motor driven actuator with a calibration/pre-set manipulator**
Motorbetriebener Aktuator mit einem Kalibrierungs-/Voreinstellungsmanipulator
Actionneur entraîné par un moteur avec un manipulateur d'étalonnage/prédéfini

(43) Date of publication of application: 05.08.2015
(73) Proprietor: Danfoss A/S, 6430 Nordborg (DK)
(72) Inventor: Clausen, Anders Østergaard, 8680 Ry (DK)
(74) Representative: Inspicos P/S

(56) References cited:
- EP-A1- 1 826 650
- WO-A2-2009/026921
- WO-A2-2009/069104
- US-A1- 2004 134 665

## Description

### FIELD OF THE INVENTION

The present invention relates to an actuator, more particularly to a motor driven actuator. The actuator may be used for controlling a valve. The actuator of the invention comprises a calibration/pre-set manipulator which allows an operator to initiate calibration of the actuator, as well as to adjust a pre-setting of the actuator.

### BACKGROUND OF THE INVENTION

Actuators are sometimes provided with a calibration mechanism, which allows the actuator to be calibrated or recalibrated. In the case that the actuator is used for controlling a valve, the calibration may also include flushing the valve.

Furthermore, actuators may be provided with a pre-set mechanism which allows a setting to be adjusted. The setting may, e.g., be a maximum flow rate through a valve which is controlled by the actuator. Such pre-set mechanisms are often arranged inside the component, e.g. the valve, being controlled by the actuator, possibly with a manipulator arranged on an outer surface of the component being controlled. This makes it difficult to adjust the setting once the component and the actuator have been installed, since it is necessary to gain access to the component. This may require that the actuator is dismantled.

Calibration mechanisms and pre-set mechanisms are normally provided as separate mechanisms, with separate manipulators allowing an operator to initiate calibration and adjusting the setting, respectively. When designing the actuator, it is therefore necessary to balance the need for large manipulators, allowing easy handling of the manipulators, and a compact actuator. If the manipulators are made sufficiently large to allow easy handling, the actuator will become bulky. On the other hand, if the actuator is made compact, the manipulators will be so small, that they are not easy to operate.

EP 1 826 650 A1 discloses a thermostatic setting device for valves in room heating and conditioning systems. The device comprises a heat-reactive actuator seated into an actuator seat of a support structure. The device further comprises selecting means suitable for adjusting the position of the actuator seat, so as to allow a predetermined positioning of a control stem based on a selectable target temperature value. The selecting means, the actuator seat, the heat-reactive actuator and transmission means form an actuating line and a calibrating member is arranged in series in the actuating line so as to allow the calibration thereof.

### DESCRIPTION OF THE INVENTION

It is an object of embodiments of the invention to provide an actuator, which allows a setting to be adjusted in an easy manner.

It is a further object of embodiments of the invention to provide an actuator, which is compact, while allowing for easy handling of calibration and adjustment of a setting.

The invention provides an actuator comprising:
- an actuating part,
- a motor arranged to drive the actuating part,
- a calibration mechanism, which upon activation initiates calibration of the actuator,
- a pre-set mechanism arranged to allow a setting of the actuator to be adjusted, and
- a calibration/pre-set manipulator arranged to cooperate with the calibration mechanism and the pre-set mechanism in a manner which allows an operator to activate the calibration mechanism or adjust the setting of the actuator, via the calibration/pre-set manipulator.

In the present context the term 'actuator' should be interpreted to mean a device which is capable of actuating a component, such as a valve.

The actuator comprises an actuating part and a motor arranged to drive the actuating part. In the present context the term 'actuating part' should be interpreted to mean a part of the actuator which performs the actual actuation. For instance, the actuating part may be a movable rod, which is arranged to cause movement of one or more parts of the component being actuated. The motor is arranged to drive the actuating part, i.e. when the motor is operated, it causes the actuating part to perform the actual actuation. The motor may, e.g., be connected to the actuating part via a gear arrangement. The gear arrangement may, e.g., be of a kind which transfers a rotational movement of the motor into a translational movement of the actuating part. As an alternative, the motor and the actuating part may be interconnected in another suitable manner. For instance, the motor may be provided with a threaded bore, and the actuating part may comprise or be connected to a threaded rod arranged in the threaded bore of the motor. When the motor rotates, the threaded rod will thereby perform a translational movement.

Furthermore, the actuator defines an interface towards a component being actuated by the actuator, via the actuating part.

The actuator further comprises a calibration mechanism, which upon activation initiates calibration of the actuator. In the present context, the term 'calibration' should be interpreted to mean a process which calibrates or recalibrates the actuator. For instance, the calibration may include the actuator detection which kind of component it is mechanically mounted on. In the case that the component is a valve, the actuator may measure the closing point of the valve, i.e. the position where the valve is fully closed, and/or the position where the valve is fully open. Based on the fully closed position and the fully open position, it may further be possible to determine a stroke of the valve. This may also form part of the calibration process. Thus, by activating the calibration mechanism, an operator can cause the initiation of such a calibration process.

The actuator further comprises a pre-set mechanism. The pre-set mechanism allows a setting of the actuator to be adjusted. The setting could, e.g., be a setting which relates to or is defined by the component being actuated. For instance, in the case that the component being actuated is a valve, the setting could be a maximum or minimum allowable flow rate through the valve. In this case, once the setting has been set, the actuator must be operated in such a manner that the maximum/minimum flow rate is not exceeded, even though the valve may be capable of delivering a flow rate which is outside the set boundaries.

The actuator further comprises a calibration/pre-set manipulator. The calibration/pre-set manipulator is arranged to cooperate with the calibration mechanism as well as with the pre-set mechanism. Accordingly, an operator may selectively initiate calibration of the actuator or adjust the setting via one manipulator. It should be understood, that the manipulation of the calibration/pre-set manipulator when it is desired to initiate calibration of the actuator differs from the manipulation of the calibration/pre-set manipulator when it is desired to adjust the setting.

Since the two functions described above are provided in one manipulator, it is possible to design the actuator in such a manner that the manipulator is sufficiently large to allow easy handling of the manipulator, while maintaining a compact design of the actuator.

Furthermore, since the pre-set mechanism is operated via the calibration/pre-set manipulator, which forms part of the actuator, the setting can easily be adjusted.

The motor may be an electrical motor, such as a step motor. As an alternative, the motor may be of any other suitable kind, such as a DC motor.

The calibration/pre-set manipulator may be switchable between a locked position in which the setting of the actuator is locked, and an unlocked position in which the setting of the actuator can be adjusted. According to this embodiment, the calibration/pre-set manipulator will normally be in the locked position during normal operation. Thereby it is prevented that the setting is accidentally and unintentionally adjusted. When it is desired to adjust the setting, the calibration/pre-set manipulator is switched to the unlocked position, the setting is adjusted as desired, and the calibration/pre-set manipulator is switched back to the locked position.

The calibration/pre-set manipulator may be switchable between the locked position and the unlocked position by moving a first element of the calibration/pre-set manipulator into and out of engagement with a second element of the calibration/pre-set manipulator. According to this embodiment, the calibration/pre-set manipulator is preferably in the locked position when the first and second elements are in an engaged position, and in the unlocked position when the first and second elements are out of engagement. For instance, the setting may be adjusted by performing a relative rotational movement of the first and second elements, and the first and second elements may be moved into and out of engagement by performing a relative translational or axial movement of the first and second elements. This may, e.g., cause toothed parts formed on the first and second elements to be moved into and out of engagement, thereby locking or unlocking the first and second elements rotationally with respect to each other.

As an alternative, the locked and unlocked positions may be defined by a separate locking member, or in any other suitable manner.

The calibration mechanism may comprise a calibration switch, and activation of the calibration mechanism may comprise activating the calibration switch. In this case the calibration/pre-set manipulator is adapted to cooperate with the calibration switch in such a manner that the calibration switch is activated when the calibration/pre-set manipulator is manipulated in order to initiate calibration of the actuator. The calibration switch may, e.g., be a simple switch arranged in an interior part of the actuator.

The calibration/pre-set manipulator may comprise a calibration button arranged to cooperate with the calibration switch in such a manner that pushing the calibration button causes the calibration switch to be activated. According to this embodiment, an operator may initiate calibration of the actuator simply by pushing the calibration button of the calibration/pre-set manipulator. This, in turn, will activate the calibration switch and initiate the calibration of the actuator.

According to one embodiment, pushing the calibration button for a first predetermined time may cause the actuator to calibrate, and pushing the calibration button for a second predetermined time may cause a flush signal to be generated. According to this embodiment, at least two functions are built into the calibration mechanism, i.e. calibration and flush, and a specific function can be selected by selecting the manner in which the calibration button is pushed. The flush signal may, e.g., cause a valve being actuated by means of the actuator to be flushed.

The actuator may further be provided with a display which indicates when the calibration button has been pushed for the first predetermined time and when the calibration button has been pushed for the second predetermined time. Thereby the operator is able to see when a desired function has been obtained, and the push on the calibration button should therefore be released. The display may, e.g., comprise a number of diodes which lighten up sequentially, and the operator may know that when three diodes have been lightened up the first predetermined time has lapsed, and when six diodes have been lightened up the second predetermined time has lapsed. Thus, if the operator wishes to initiate calibration of the actuator, he or she must wait until three diodes have lightened up, and if the operator wishes to generate a flush signal, he or she must wait until six diodes have lightened up.

As an alternative, several functions may be obtained by pushing the calibration button in different pushing patterns. For instance, pushing the calibration button three times may cause the actuator to calibrate, and pushing the calibration button six times may cause the actuator to generate a flush signal.

The actuator may be arranged for controlling a valve. According to one embodiment, the valve may form part of a heating and/or cooling system in a building. The actuator may be connected directly to the controlled valve, e.g. via a valve interface formed on the actuator.

The actuator may further comprise electronics for controlling the actuator. As an alternative, such electronics may be arranged exterior to the actuator. As another alternative, the actuator may be controlled by means of electrical circuits and/or switches.

The calibration/pre-set manipulator may comprise a rotatable part arranged to cooperate with the pre-set mechanism in order to adjust the setting of the actuator. According to this embodiment, the setting is adjusted by rotating the rotatable part through a suitable angle.

Furthermore, the calibration/pre-set manipulator may comprise a calibration button arranged to cooperate with the calibration mechanism in order to initiate calibration of the actuator, said calibration button being arranged centrally with respect to the rotatable part. According to this embodiment, adjustment of the setting is obtained by rotating the calibration/pre-set manipulator, and calibration is obtained by pushing the centre part of the calibration/pre-set manipulator. This provides a compact calibration/pre-set manipulator.

According to a preferred embodiment of the invention, the calibration/pre-set manipulator may be operated in the following manner. When it is desired to adjust the setting of the actuator, a rotatable part of the calibration/pre-set manipulator is pulled outwards, i.e. in a direction away from the actuator. This causes the rotatable part to be moved out of engagement with another part of the calibration/pre-set manipulator, thereby allowing the rotatable part to rotate. The rotatable part is connected to the pre-set mechanism in such a manner that the setting of the actuator is adjusted when the rotating part is rotated. Thus, the rotating part is then rotated, thereby adjusting the setting to a desired value. Then the rotating part is pushed back in a direction towards the actuator, thereby moving the rotating part into engagement with the other part of the calibration/pre-set manipulator. This prevents further rotations of the rotating part, and thereby the setting is locked at the selected value.

When it is desired to calibrate the actuator, the calibration button, arranged centrally with respect to the rotating part, is pushed. The calibration button is connected to the calibration mechanism, e.g. to a switch of the calibration mechanism, in such a manner that this causes calibration of the actuator to be initiated.

The actuator may be modular, in the sense that it may comprise a basis module and at least one additional module, mounted on the basis module at an interface formed on the basis module. The basis module may include all the basic features which are necessary in order to allow the actuator to operate, such as the actuating part and the motor. The basis module may further comprise the calibration mechanism, the pre-set mechanism and the calibration/pre-set manipulator.

The additional module may be arranged to cooperate with the basis module to provide additional functionality to the actuator. For instance, the additional module may be in the form of a connection module allowing the actuator to be connected to one or more further components, e.g. other valves. Thereby the actuator may be capable of controlling the one or more further components. For instance, the connection module may allow the actuator to control calibration and/or pre-set of the one or more further components, in the manner described above.

### BRIEF DESCRIPTION OF THE DRAWINGS

The invention will now be described in further detail with reference to the accompanying drawings, in which
Fig. 1 is a perspective view of an actuator according to an embodiment of the invention,
Fig. 2 is an exploded view of the actuator of Fig. 1,
Fig. 3 is a cross sectional view of the actuator of Figs. 1 and 2,
Fig. 4 is a cross sectional and perspective view of the actuator of Figs. 1-3, and
Figs. 5-7 illustrate operation of the actuator of Figs. 1-4.

### DETAILED DESCRIPTION OF THE DRAWINGS

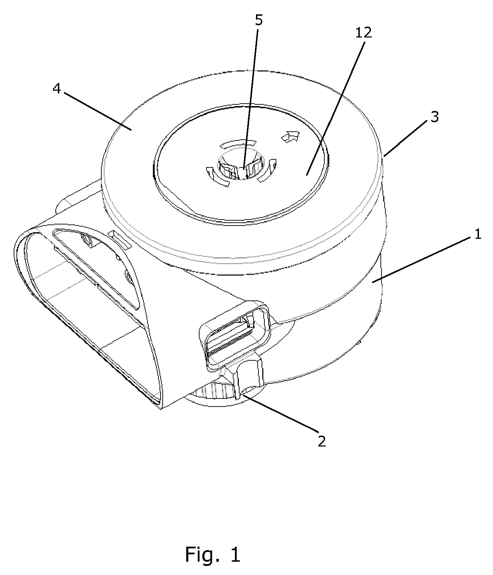

Fig. 1 is a perspective view of an actuator 1 according to an embodiment of the invention. The actuator 1 can be connected to a component, such as a valve, to be actuated via an interface 2.

The actuator 1 comprises a calibration/pre-set manipulator 3 arranged at a top part of the actuator 1.

The calibration/pre-set manipulator 3 comprises a rotatable part 4 which is arranged to cooperate with a pre-set mechanism in such a manner that when the rotatable part 4 is rotated, a setting of the actuator 1 is adjusted. The calibration/pre-set manipulator 3 further comprises a calibration button 5 which is arranged to cooperate with a calibration mechanism in such a manner that pushing the calibration button 5 causes calibration of the actuator 1 to be initiated.

Thus, the calibration/pre-set manipulator 3 allows, in a compact design, an operator to adjust the setting of the actuator 1 and/or to initiate calibration of the actuator 1. Furthermore, the rotatable part 4 and the calibration button 5 are both sufficiently large to ensure easy handling by the operator.

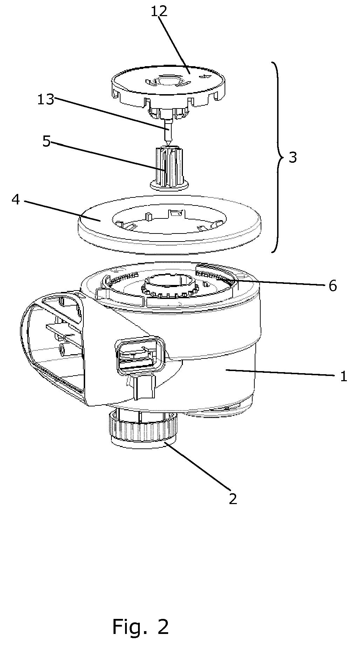

Fig. 2 is an exploded view of the actuator 1 of Fig. 1. The rotatable part 4 and the calibration button 5 are clearly seen. Furthermore, a toothed ring 6 can be seen. The rotatable part 4 comprises a similar toothed ring. When the toothed ring of the rotatable part 4 is arranged in engagement with the toothed ring 6, the rotatable part 4 is in a locked position, and is thereby prevented from performing rotating movements.

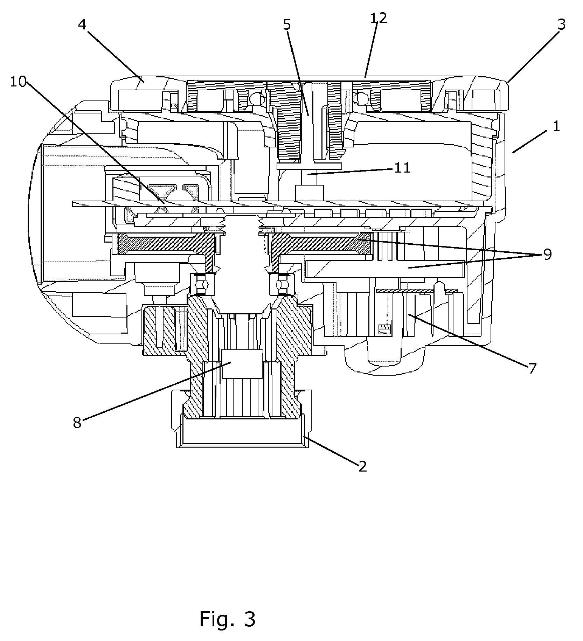

Fig. 3 is a cross sectional view of the actuator 1 of Figs. 1 and 2, revealing the interior of the actuator 1. A motor 7 is connected to an actuating part 8, via a gear system 9, in such a manner that rotational movements of the motor 7 are transformed into translational movements of the actuating part 8. A printed circuit board 10 provides electronics for controlling the actuator 1.

The rotatable part 4 is movable between a locked position and an unlocked position, as described above. In the unlocked position, the rotatable part 4 is allowed to perform rotating movements, while such movements are prevented, when the rotatable part 4 is in the locked position. In Fig. 3 the rotatable part 4 is in the locked position. In order to move the rotatable part 4 into the unlocked position, the rotatable part 4 must be pulled outwards along an axial direction with respect to the rotational axis defined by the rotatable part 4.

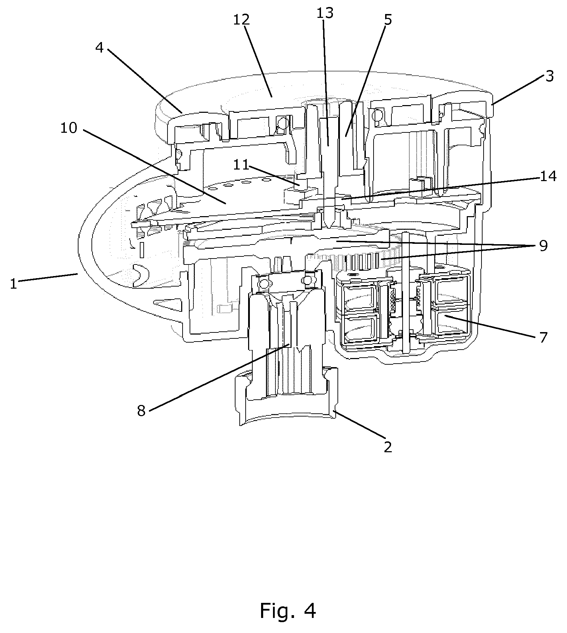

When the rotatable part 4 is rotated, a setting is adjusted in a manner which will be described below with reference to Fig. 4.

The calibration button 5 is arranged in contact with a calibration switch 11 in such a manner that when the calibration button 5 is pushed, the calibration switch 11 is activated. This causes calibration of the actuator 1 to be initiated.

Fig. 4 is a cross sectional and perspective view of the actuator 1 of Figs. 1-3, allowing further details of the interior of the actuator 1 to be seen. When the rotatable part is rotated, the calibration button 5, a pre-set part 12, and a pre-set rod 13 are rotated along. The pre-set rod 13 is connected to a potentiometer 14, which is thereby adjusted. This causes a setting of the actuator 1 to be adjusted.

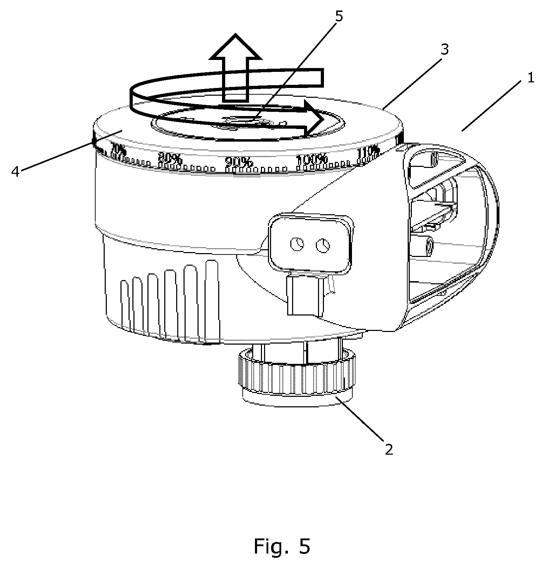

Figs. 5-7 illustrate operation of the actuator 1 of Figs. 1-4. Fig. 5 is a perspective view of the actuator 1, illustrating that the rotatable part 4 can be moved into the unlocked position by pulling the rotatable part 4 in an outwards and axial direction. It is further illustrated that the setting of the actuator 1 can subsequently be adjusted by rotating the rotatable part 4. The rotatable part 4 is further provided with scales indicating to the operator the value of the setting being adjusted when the rotatable part 4 is rotated. The scales illustrated in Figs. 5-7 relates to a flow rate limit through a valve being actuated by the actuator 1, and indicates percentage of a maximum possible flow rate. Thus, an upper limit on the flow rate through the valve can be set between 0% and 100% of the maximum possible flow rate, by rotating the rotatable part 4 to an appropriate position corresponding to the desired setting.

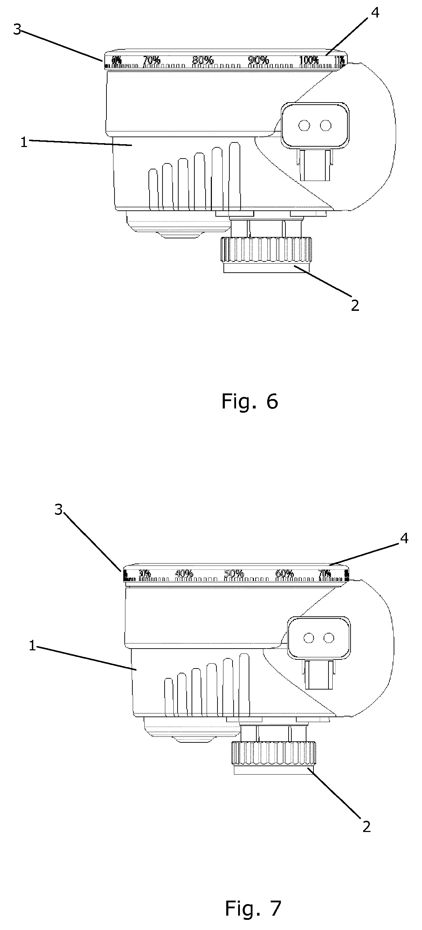

Figs. 6 and 7 are side views of the actuator 1 of Figs. 1-5. In Fig. 6 the rotatable part 4 is in the locked position, and in Fig. 7 the rotatable part 4 is in the unlocked position.

## Claims

1. An actuator (1) comprising:
- an actuating part (8),
- a calibration mechanism (5, 11),
- a pre-set mechanism (12, 13) arranged to allow a setting of the actuator (1) to be adjusted, and
- a calibration/pre-set manipulator (3) arranged to cooperate with the calibration mechanism (5, 11) and the pre-set mechanism (12, 13) in a manner which allows an operator to activate the calibration mechanism (5, 11) or adjust the setting of the actuator (1), via the calibration/pre-set manipulator (3)
**characterized in that** the actuator (1) further comprises a motor (7) arranged to drive the actuating part (8), and **in that** the calibration mechanism (5, 11) upon activation initiates calibration of the actuator (1).

2. An actuator (1) according to claim 1, wherein the motor (7) is an electrical motor.

3. An actuator (1) according to claim 1 or 2, wherein the calibration/pre-set manipulator (3) is switchable between a locked position in which the setting of the actuator (1) is locked, and an unlocked position in which the setting of the actuator (1) can be adjusted.

4. An actuator (1) according to claim 3, wherein the calibration/pre-set manipulator (3) is switchable between the locked position and the unlocked position by moving a first element (4) of the calibration/pre-set manipulator (3) into and out of engagement with a second element (6) of the calibration/pre-set manipulator (3).

5. An actuator (1) according to any of the preceding claims, wherein the calibration mechanism (5, 11) comprises a calibration switch (11), and wherein activation of the calibration mechanism (5, 11) comprises activating the calibration switch (11).

6. An actuator (1) according to claim 5, wherein the calibration/pre-set manipulator (3) comprises a calibration button (5) arranged to cooperate with the calibration switch (11) in such a manner that pushing the calibration button (5) causes the calibration switch (11) to be activated.

7. An actuator (1) according to claim 6, wherein pushing the calibration button (5) for a first predetermined time causes the actuator (1) to calibrate, and pushing the calibration button (5) for a second predetermined time causes a flush signal to be generated.

8. An actuator (1) according to any of the preceding claims, wherein the actuator (1) is arranged for controlling a valve.

9. An actuator (1) according to any of the preceding claims, further comprising electronics (10) for controlling the actuator (1).

10. An actuator (1) according to any of the preceding claims, wherein the calibration/pre-set manipulator (3) comprises a rotatable part (4) arranged to cooperate with the pre-set mechanism (12, 13) in order to adjust the setting of the actuator (1).

11. An actuator (1) according to claim 10, wherein the calibration/pre-set manipulator (3) comprises a calibration button (5) arranged to cooperate with the calibration mechanism (5, 11) in order to initiate calibration of the actuator (1), said calibration button (5) being arranged centrally with respect to the rotatable part (4).

## Patentansprüche

1. Aktuator (1), aufweisend:
- ein Betätigungsteil (8),
- einen Kalibrierungsmechanismus (5, 11),
- einen Voreinstellungsmechanismus (12, 13), der so angeordnet ist, dass er eine Anpassung einer Einstellung des Aktuators (1) erlaubt, und
- einen Kalibrierungs-/Voreinstellungsmanipulator (3), der zum Zusammenwirken mit dem Kalibrierungsmechanismus (5, 11) und dem Voreinstellungsmechanismus (12, 13) in einer Weise angeordnet ist, die dem Bediener eine Aktivierung des Kalibrierungsmechanismus (5, 11) oder eine Anpassung der Einstellung des Aktuators (1) mittels des Kalibrierungs-/Voreinstellungsmanipulators (3) erlaubt,
**dadurch gekennzeichnet, dass** der Aktuator (1) des Weiteren einen Motor (7) aufweist, der zum Antreiben des Betätigungsteils (8) angeordnet ist, und dass der Kalibrierungsmechanismus (5, 11) bei Aktivierung eine Kalibrierung des Aktuators (1) einleitet.

2. Aktuator (1) nach Anspruch 1, wobei der Motor (7) ein Elektromotor ist.

3. Aktuator (1) nach Anspruch 1 oder 2, wobei der Kalibrierungs-/Voreinstellungsmanipulator (3) zwischen einer verriegelten Position, in welcher die Einstellung des Aktuators (1) verriegelt ist, und einer unverriegelten Position, in welcher die Einstellung des Aktuators (1) anpassbar ist, schaltbar ist.

4. Aktuator (1) nach Anspruch 3, wobei der Kalibrierungs-/Voreinstellungsmanipulator (3) zwischen der verriegelten Position und der unverriegelten Position durch Bewegen eines ersten Elements (4) des Kalibrierungs-/Voreinstellungsmanipulators (3) in den und aus dem Eingriff mit einem zweiten Element (6) des Kalibrierungs-/Voreinstellungsmanipulators (3) schaltbar ist.

5. Aktuator (1) nach einem der vorangehenden Ansprüche, wobei der Kalibrierungsmechanismus (5, 11) einen Kalibrierungsschalter (11) aufweist und wobei eine Aktivierung des Kalibrierungsmechanismus (5, 11) ein Aktivieren des Kalibrierungsschalters (11) aufweist.

6. Aktuator (1) nach Anspruch 5, wobei der Kalibrierungs-/Voreinstellungsmanipulator (3) eine Kalibrierungstaste (5) aufweist, die zum Zusammenwirken mit dem Kalibrierungsschalter (11) in einer Weise angeordnet ist, dass ein Drücken der Kalibrierungstaste (5) ein Aktivieren des Kalibrierungsschalters (11) bewirkt.

7. Aktuator (1) nach Anspruch 6, wobei das Drücken der Kalibrierungstaste (5) über eine erste vorgegebene Zeit ein Kalibrieren des Aktuators (1) bewirkt und das Drücken der Kalibrierungstaste (5) über eine zweite vorgegebene Zeit ein Generieren eines Spülsignals bewirkt.

8. Aktuator (1) nach einem der vorangehenden Ansprüche, wobei der Aktuator (1) zum Steuern eines Ventils angeordnet ist.

9. Aktuator (1) nach einem der vorangehenden Ansprüche, des Weiteren aufweisend eine Elektronik (10) zum Steuern des Aktuators (1).

10. Aktuator (1) nach einem der vorangehenden Ansprüche, wobei der Kalibrierungs-/Voreinstellungsmanipulator (3) ein drehbares Teil (4) aufweist, das zum Zusammenwirken mit dem Voreinstellungsmechanismus (12, 13) angeordnet ist, um die Einstellung des Aktuators (1) anzupassen.

11. Aktuator (1) nach Anspruch 10, wobei der Kalibrierungs-/Voreinstellungsmanipulator (3) eine Kalibrierungstaste (5) aufweist, die zum Zusammenwirken mit dem Kalibrierungsmechanismus (5, 11) angeordnet ist, um eine Kalibrierung des Aktuators (1) einzuleiten, wobei die Kalibrierungstaste (5) zentral in Bezug auf das drehbare Teil (4) angeordnet ist.

## Revendications

1. Actionneur (1), comprenant:
- une partie d'actionnement (8),
- un mécanisme d'étalonnage (5, 11),
- un mécanisme de préréglage (12, 13) agencé de manière à permettre un réglage de l'actionneur (1) à régler, et
- un manipulateur d'étalonnage/préréglage (3) agencé de manière à coopérer avec le mécanisme d'étalonnage (5, 11) et le mécanisme de préréglage (12, 13) d'une manière qui permet à un opérateur d'activer le mécanisme d'étalonnage (5, 11) ou d'effectuer le réglage de l'actionneur (1), par l'intermédiaire du manipulateur d'étalonnage/préréglage (3),
**caractérisé en ce que** l'actionneur (1) comprend en outre un moteur (7) agencé de manière à entraîner la partie d'actionnement (8), et **en ce que** le mécanisme d'étalonnage (5, 11), lors de l'activation, amorce l'étalonnage de l'actionneur (1).

2. Actionneur (1) selon la revendication 1, dans lequel le moteur (7) est un moteur électrique.

3. Actionneur (1) selon la revendication 1 ou 2, dans lequel le manipulateur d'étalonnage/préréglage (3) peut être commuté entre une position verrouillée, dans laquelle le réglage de l'actionneur (1) est verrouillé, et une position déverrouillée, dans laquelle le réglage de l'actionneur (1) peut être effectué.

4. Actionneur (1) selon la revendication 3, dans lequel le manipulateur d'étalonnage/préréglage (3) peut être commuté entre la position verrouillée et la position déverrouillée en déplaçant un premier élément (4) du manipulateur d'étalonnage/préréglage (3) en engagement et hors d'engagement avec un second élément (6) du manipulateur d'étalonnage/préréglage (3).

5. Actionneur (1) selon l'une quelconque des revendications précédentes, dans lequel le mécanisme d'étalonnage (5, 11) comprend un commutateur d'étalonnage (11), et dans lequel l'activation du mécanisme d'étalonnage (5, 11) comprend l'activation du commutateur d'étalonnage (11).

6. Actionneur (1) selon la revendication 5, dans lequel le manipulateur d'étalonnage/préréglage (3) comprend un bouton d'étalonnage (5) agencé de manière à coopérer avec le commutateur d'étalonnage (11) de telle sorte qu'une poussée sur le bouton d'étalonnage (5) déclenche l'activation du commutateur d'étalonnage (11).

7. Actionneur (1) selon la revendication 6, dans lequel une poussée sur le bouton d'étalonnage (5) pendant une première durée prédéterminée entraîne l'actionneur (1) à étalonner, et une poussée sur le bouton d'étalonnage (5) pendant une seconde durée prédéterminée déclenche la génération d'un signal de purge.

8. Actionneur (1) selon l'une quelconque des revendications précédentes, dans lequel l'actionneur (1) est agencé de manière à commander une soupape.

9. Actionneur (1) selon l'une quelconque des revendications précédentes, comprenant en outre des composants électroniques (10) pour commander l'actionneur (1).

10. Actionneur (1) selon l'une quelconque des revendications précédentes, dans lequel le manipulateur d'étalonnage/préréglage (3) comprend une partie rotative (4) agencée de manière à coopérer avec le mécanisme de préréglage (12, 13) dans le but d'effectuer le réglage de l'actionneur (1).

11. Actionneur (1) selon la revendication 10, dans lequel le manipulateur d'étalonnage/préréglage (3) comprend un bouton d'étalonnage (5) agencé de manière à coopérer avec le mécanisme d'étalonnage (5, 11) dans le but d'amorcer l'étalonnage de l'actionneur (1), ledit bouton d'étalonnage (5) étant agencé de façon centrale par rapport à la partie rotative (4).
